# EUROPÄISCHE PATENTSCHRIFT

(11) **EP 1 056 998 B1**
(45) Veröffentlichungstag und Bekanntmachung des Hinweises auf die Patenterteilung: **07.05.2003**
(21) Anmeldenummer: 99907467.7
(22) Anmeldetag: 01.02.1999
(51) Int. Cl.: G01M 11/00

(54) **MESSVERFAHREN FÜR EINZELFASERN VON KABELN**
MEASURING METHOD FOR INDIVIDUAL CABLE FIBRES
METHODE DE MESURE POUR FIBRES INDIVIDUELLES DE CABLES

(30) Priorität: 28.02.1998 DE 19808601
(43) Veröffentlichungstag der Anmeldung: 06.12.2000
(73) Patentinhaber: Deutsche Telekom AG, 53113 Bonn (DE)
(72) Erfinder: VOBIAN, Joachim, D-64367 Mühltal (DE); HERCHENRÖDER, Georg, D-64287 Darmstadt (DE); MÖRL, Klaus, D-07749 Jena (DE)
(86) Internationale Anmeldenummer: EP9900630
(87) Internationale Veröffentlichungsnummer: WO99044027

(56) Entgegenhaltungen:
- EP-A- 0 548 935
- EP-A- 0 619 657
- US-A- 4 289 398
- PATENT ABSTRACTS OF JAPAN vol. 007, no. 206 (P-222), 10. September 1983 & JP 58 100733 A (HITACHI SEISAKUSHO KK), 15. Juni 1983

## Beschreibung

Die Erfindung betrifft ein Verfahren zur Messung relevanter Übertragungsparameter von mehrere Einzelfasern aufweisenden Kabeln gemäß der im Oberbegriff angegebenen Art.

Optische Verbindungen, insbesondere Glasfaserkabel zur Verbindung von Quellen und Senken sind grundsätzlich bekannt und werden im großen Umfang in der Nachrichtenübertragungstechnik und Datenübertragungstechnik eingesetzt. Sie werden auch zur Gebäudeverkabelung als Kabel mit zwei und mehreren Lichtwellenleitern zum Zwecke der Daten- und Informationsübertragung sowie zur Bildübertragung und Sprachübertragung verwendet.

Ein prinzipielles Problem bei Feldmessungen an installierten Glasfaserkabeln ist das Messen von Einzelfasern.

Generell müssen bei den bisher bekannten Messverfahren dabei der Sender und der Empfänger räumlich getrennt aufgebaut werden, nämlich ein Gerät an dem einen Ende und das andere Gerät an dem anderen Ende der Glasfaser. Um eine einwandfreie Funktion des Glasfaserkabels zu gewährleisten, ist es essentiell, dass die Fasern einzeln gemessen werden, um ihre spezifischen Eigenschaften und Parameter zu bestimmen. So ist es nicht statthaft, mittels einer Schleife aus zwei verbundenen Fasern, nämlich eine Faser hin und eine Faser zurück, zum Ausgangspunkt zurückzukehren. Andererseits ist die notwendige räumliche Trennung, zum Beispiel bis zu 50km im Telefonnetz, zeit- und kostenaufwendig oder überhaupt nicht möglich. Vorrangig müssen zwei Hauptparameter der Einwellenfasern (SM-Fasern) gemessen werden. Dies sind die Dämpfung und die Übertragungsbandbreite. Die Messung der Dämpfung ist unproblematisch und kann in sehr einfacher Weise genau mit einem Optical Time Domain Reflectometer (OTDR) von einer Seite der Strecke gemessen werden.. Bei Bandbreitenmessungen hingegen muß man zu beiden Seiten des Kabels Zugang haben. Zwei Effekte bestimmen die Bandbreite bei ultrahochbitratigen Übertragungssystemen, nämlich die chromatische Dispersion (CD) und die Polarisationsmodendispersion (PMD). Vor allem bei PMD-Messungen sind Schleifenmessungen wertlos, da die PMD-Werte der einzelnen Fasern eines Kabels höchst unterschiedlich sein können. Die Unterschiede können bis zu einem Faktor > 30 sein.

Hierzu wird auf die Veröffentlichung von H. Gruhl, G. Herchenröder, A. Mattheus, J. Vobian: Characterization of 11000 km of installed standard monomode fibre and statistical analysis in the view of network design", Proc. NOC '97', Core and ATM Network, Antwerpen (1997), p. 59 sowie die Veröffentlichung von J. Vobian, K. Mörl: "PMD measurements in the time and frequency domains on Telecom links within the framework of the ACTS projects "UPGRADE" and "PHOTON", Proc. OFMC 97, Teddington (1997) hingewiesen.

Außerdem addieren sich die PMD-Werte der einzelnen Fasern nicht linear (Quadratwurzellängenabhängigkeit). Verschärft wird das Problem der notwendigen Separation Sender - Empfänger noch dadurch, daß verschiedene Meßmethoden in diesem Fall entweder überhaupt nicht angewandt werden können, wie zum Beispiel die Jones-Matrix-Methode bei PMD-Messungen in der Frequenzdomäne, also mit dem Polarimeter oder aber es sind nur unbefriedigende Problemlösungen bzw. dafür erforderliche Geräte bekannt, gemäß der letztgenannten Veröffentlichung. Generell ist die Synchronisation von Sender und Empfänger bei Getrenntmessungen in der Frequenzdomäne problematisch, bzw. aufwendig. CD-Messungen mit der Phasenverschiebemethode erfordern eine zweite Faser für den Synchronisationsimpuls.

Dies stellt eine große Einschränkung in der Praxis dar. Auch beim in J. Vobian, G. Herchenröder, E. Unterseher: "Long-Distance Field Measurements of Spectral Chromatic Dispersion", J. Opt. Commun. 6 (1985) 4, 137 beschriebenen Feldmeßplatz nach dem Gruppenlaufzeitprinzip muß mit einem Trick gearbeitet werden, der 3dB Verluste bringt. Die Detektorsignale der ankommenden Lichtimpulse werden mit Hilfe einer Delay-Line geteilt und als Triggerimpuls bzw. zeitverzögert als Meßsignal benutzt (quasiinterne Triggerung). Da die CD- als auch die PMD-Messungen keinesfalls trivial sind, muß vor allem auch zur Bewertung der gewonnenen Resultate an beiden Seiten der Strecke hochqualifiziertes Personal eingesetzt werden, was sehr kostenintensiv ist.

In Patent Abstracts of Japan vol. 007, no. 206 (P-222), 10. September 1983, ist lediglich eine Dämpfungsmessung mit einer Methode beschrieben, die bereits durch das OTDR-Prinzip überholt ist.

Es ist nicht für Dispersions-, Bandbreite- und PMD-Messungen geeignet, die völlig anders als Dämpfungsmessungen sind, da es sich um erheblich anspruchsvollere, kompliziertere Faserparameter handelt. Der Spiegel am Faserende gemäß obengenanntem Patent Abstract of Japan ist außerdem ein ganz normaler Spiegel und für die Messungen komplizierter Faserparameter ungeeignet.

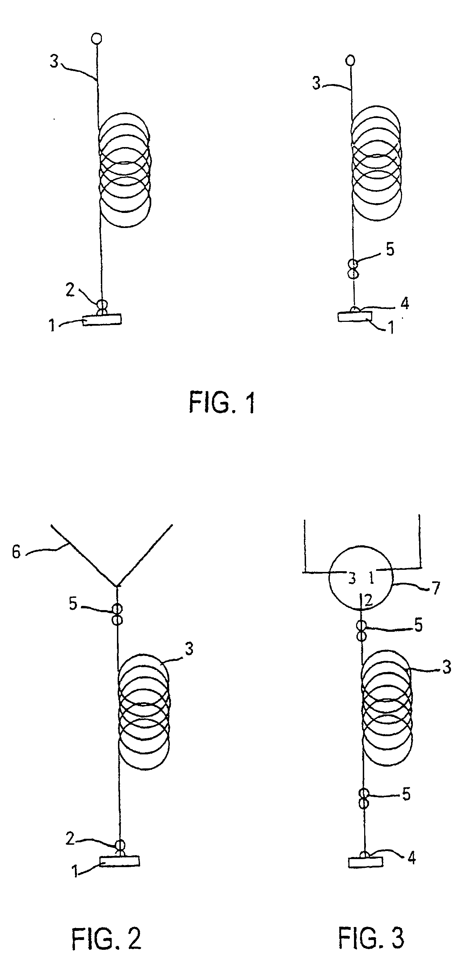

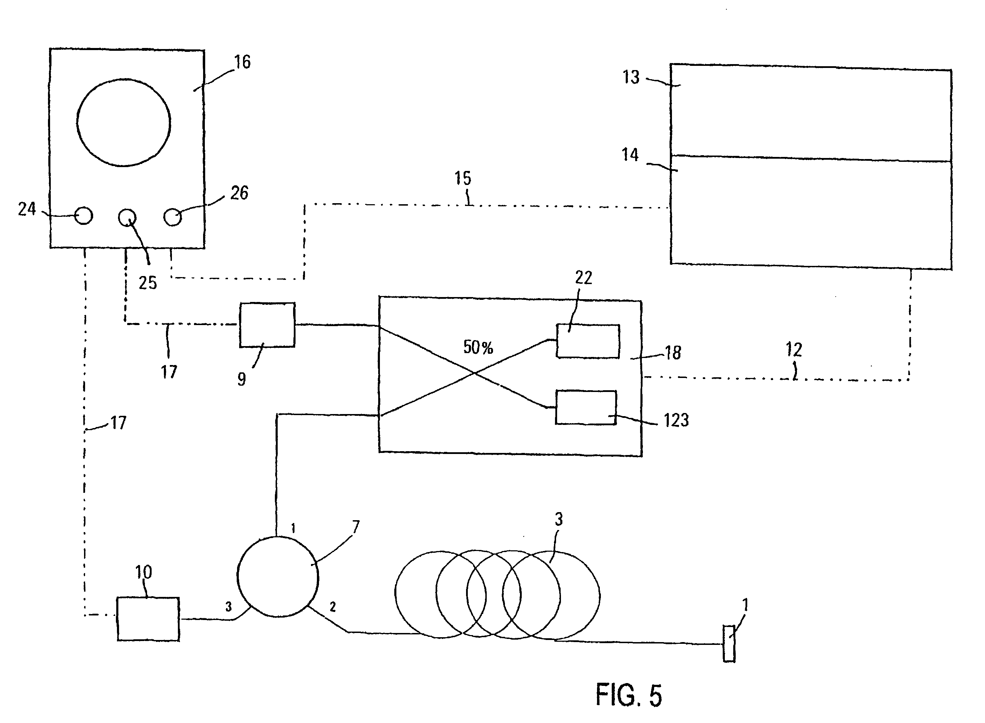

Nach EP 0 548 935 A1 wird ebenfalls nur ein anderer Faserparameter gemessen, der effektive Brechzahlindex (Gruppenindex n_{G}). Notwendigerweise besteht wie in den Figuren 1 und 5 dargestellt, außer der Testfaser eine Verbindung zwischen Sender und Empfänger zwischen den Blöcken 1 und 4 mit dem Block 7, das heißt daß eine Recheneinheit mit der Quelle zum Steuern der Wellenlängenvariation verbunden ist.

In den Blockschaltbildern nach deren Figuren 2 bis 4 wird die natürliche Fresnelreflexion (ca. 4 %) der Fasernendfläche benutzt, wie bei bekannten OTDR-Messungen; diese reichen für die geforderten Messungen bei weitem jedoch nicht aus.

Der Erfindung liegt deshalb die Aufgabe zugrunde, ein Messverfahren zur Messung relevanter Übertragungsparameter mehrere Einzelfasern, insbesondere Einwellen- und Vielwellenfasern, aufweisender Glasfaserkabel oder Plastikfaserkabel zu schaffen, wodurch eine exakte Messung der relevanten Parameter von nur einer Seite aus der Glas-, oder Plastikfaser ermöglicht wird. Auch die Auswertung und Bewertung der gewonnenen Messergebnisse soll nur noch an einem Ende der Faser des Glasfaserkabels oder des Plastikfaserkabels durch hochqualifiziertes Personal möglich sein. Das Beispiel beschränkt sich auf Fasern auf Quarzglasbasis und spektral gesehen auf den Bereich zwischen 1200 nm und 1650 nm mit den zwei optischen Fenstern um 1300 nm und 1550 nm. Die bei Experimenten benutzten optischen Komponenten, zum Beispiel Koppler und Zirkulatoren, sind ebenfalls nur für diesen Spektralbereich ausgelegt. Das ist aber keine Einschränkung der vorgestellten Messprinzipien, die auch auf Plastikfasern mit einem Arbeitsgebiet zwischen 650 nm und 950 nm und auf Meterkomponenten-, Fluoridglasfasern anwendbar sind.

Die erfindungsgemäße Lösung der Aufgabe ist im Kennzeichen des Patentanspruchs 1 charakterisiert.

Weitere Lösungen bzw. Ausgestaltungen der Erfindung sind in den Kennzeichen der Patentansprüche 2 bis 10 charakterisiert.

Dadurch, daß die Meßstrahlung am Ende der Testphase mit Hilfe eines Spiegels, im folgenden Schmidt-Spiegel genannt, mit sehr hohem Reflexionsvermögen (> 99%) zum Fasereingang reflektiert wird und am Einkoppelort die Messung des gewünschten Faserparameters ermöglicht wird, ist eine räumliche Trennung von Sende- und Empfangsstation des Meßsystems nicht mehr erforderlich. Außerdem ist die Auswertung der Meßergebnisse von hochspezialisiertem Personal an nur einem Ende des jeweiligen Kabels bzw. der zu messenden Faser erstmals in der Praxis realisierbar. Nicht nur, daß die zeit- und kostenaufwendige räumliche Trennung von Sende- und Empfangsgerät und dem dazu erforderlichen Personal beseitigt wird, ist auch eine wesentlich präzisere und schnellere Auswertung der Meßergebnisse möglich. Dadurch, daß die hochreflektierende Spiegelschicht auf die Stirnfläche eines beliebigen Fasersteckers aufgebracht werden kann, so daß entweder der mit der Spiegelschicht versehene Stecker direkt oder über ein kurzes Glasfaserkabelstück bzw. Plastikfaserkabelstück, das mit einem normalen Stecker und mit dem Spiegelstecker konfektioniert ist, zusammengesteckt wird, ist eine wenig störanfällige Anordnung geschaffen worden. Die Verwendung eines so konfektionierten Glasfaserkabelstückes hat den Vorteil, daß der Spiegelstecker unberührt bleibt und geschont wird. Die reflektierte Meßstrahlung kann eingangsseitig mit einem Y-Koppler ausgekoppelt werden und dem Meßvorgang zugeführt werden. Außerdem ist es möglich, anstatt des Y-Kopplers in beiden optischen Fenstern je einen Zirkulator zu verwenden, der im Vergleich zum Y-Koppler eine wesentlich kleinere Einfügedämpfung aufweist. Die erfindungsgemäße Lösung erlaubt es außerdem, daß für beide optische Fenster, also im gesamten interessierenden Spektralbereich, nur ein Zirkulator verwendet wird, wobei eine geringfügig höhere Einfügedämpfung in Kauf genommen wird. Das Meßverfahren hat den Vorteil, daß es für die Messung der chromatischen Dispersion, der Polarisationsmodendispersion und der Bandbreite von Multimodeglas- und plastikfasern eingesetzt werden kann. Außerdem findet es bei hochpräzisen Dämpfungsmessungen mit Rückschneidetechnik an verlegten Glasfaser- bzw. Plastikfaserkabeln Anwendung oder dann, wenn bei Labormessungen beide Glasfaserenden in getrennten Räumen sind.

Die Erfindung wird im folgenden anhand von in der Zeichnung dargestellten Ausführungsbeispielen näher beschrieben. In der Beschreibung, in den Patentansprüchen, der Zusammenfassung und in der Zeichnung werden die in der hinten angeführten Liste der Bezugszeichen verwendeten Begriffe und Bezugszeichen verwendet.

In der Zeichnung bedeuten:
- Fig. 1: Meßprinzip;
- Fig. 2: ein Schmidt-Spiegelstecker mit Testfaser und einem Y-Koppler verbunden;
- Fig. 3: ein Schmidt-Spiegelstecker mit der Testfaser und einem Zirkulator verbunden;
- Fig. 4: ein prinzipieller Aufbau zur Messung der chromatischen Dispersion mit dem Schmidt-Spiegel (absolute Gruppenlaufzeitmessung);
- Fig. 5: ein Aufbau zur Messung der chromatischen Dispersion mit dem Schmidt-Spiegel (relative Gruppenlaufzeitmessung);
- Fig. 6: Gruppenlaufzeitkurven (oben) und Dispersionskurven (unten) einer DC-Faser von Philips;
- Fig. 7: ein PMD-Meßaufbau und
- Fig. 8: ein Interf erogramm einer HiBi-PANDA-Faser.

In Fig. 1 ist das Meßprinzip dargestellt. Auf der linken Seite ist ein Schmidt-Spiegel 1 auf einem Faserstecker 2 direkt mit einer Testfaser 3 zusammengesteckt und im rechten Bild ist ein Glasfaserkabelstück, konfektioniert mit einem Schmidt-Spiegelstecker 4 und einem normalen Stecker 5, der mit der Testfaser 3 zusammengesteckt wird, dargestellt. Es ist zum Beispiel aus H. Döring, J. Peupelmann, F. Wenzel: "Pr³⁺-doped fibre laser using direct coated dichroic mirrors", Electr. Lett. Vol. 31 (1995), No. 13, p. 1068 bekannt, daß es durchaus möglich ist, Spiegel und Filter aller Art als dielektrische Schichtsysteme auf die Stirnflächen beliebiger Faserstecker aufzubringen. Im vorliegenden Beispiel wird ein hochreflektierender Spiegel mit einem Reflexionsvermögen > 99.8% im betrachteten Spektralbereich zwischen 1200 und 1650 nm auf die Stirnfläche eines Fasersteckers aufgebracht und dieser so präparierte Stecker, wie bereits erwähnt, Schmidt-Spiegel 1 genannt, mit dem normalen Stecker 5 des entfernten Endes der Faser 3 zusammengesteckt. Obwohl die Spiegelschichten mechanisch außerordentlich stabil sind, ist es jedoch sicherer, ein kurzes Glasfaserkabelstück (zum Beispiel einige Zentimeter lang) mit zwei Steckern, wobei der eine Stecker mit der Spiegelschicht versehen ist, zu benutzen. Der zweite Stecker 5 wird dann für die Steckverbindung mit der Testfaser 3 verwendet. Am Schmidt-Spiegel 1 wird die Meßstrahlung reflektiert und in der Testfaser 3 zum Ausgangspunkt zurückgeführt, Sie durchläuft die Testfaser 3 also zweimal, das heißt der Weg ist 2L. Die Aufgabe, das reflektierte Licht von der Eingangsstrahlung zu trennen wird hier dadurch gelöst, daß entweder gemäß Fig. 2 ein spektral breitbandiger Y-Koppler 6 verwendet wird oder gemäß Fig. 3 ein Zirkulator 7 mit Ports 1-3. Es ist auch die Anordnung von zwei Zirkulatoren 7 in den beiden optischen Fenstern um 1300 nm und 1550 nm als Variante möglich. Der breitbandige Y-Koppler 7 ist preiswert und in allen optischen Labors vorhanden. Man benötigt für den gesamten interessierenden Spektralbereich nur einen einzigen Koppler. Nachteilig sind die Einfügeverluste von etwa 6 dB. Die Einfügeverluste des Zirkulators 7 im spezifizierten Arbeitsbereich sind dagegen sehr klein (< 0,6 dB). Benutzt man hingegen für beide optischen Fenster nur einen Zirkulator 7 dann sind die Verluste in beiden Randbereichen des Spektrums etwas höher (≤ 0,8 dB). Prinzipiell kann man einen Zirkulator 7 zwischen 1250 nm und 1620 nm einsetzen, was experimentell überprüft und nachgewiesen wurde.

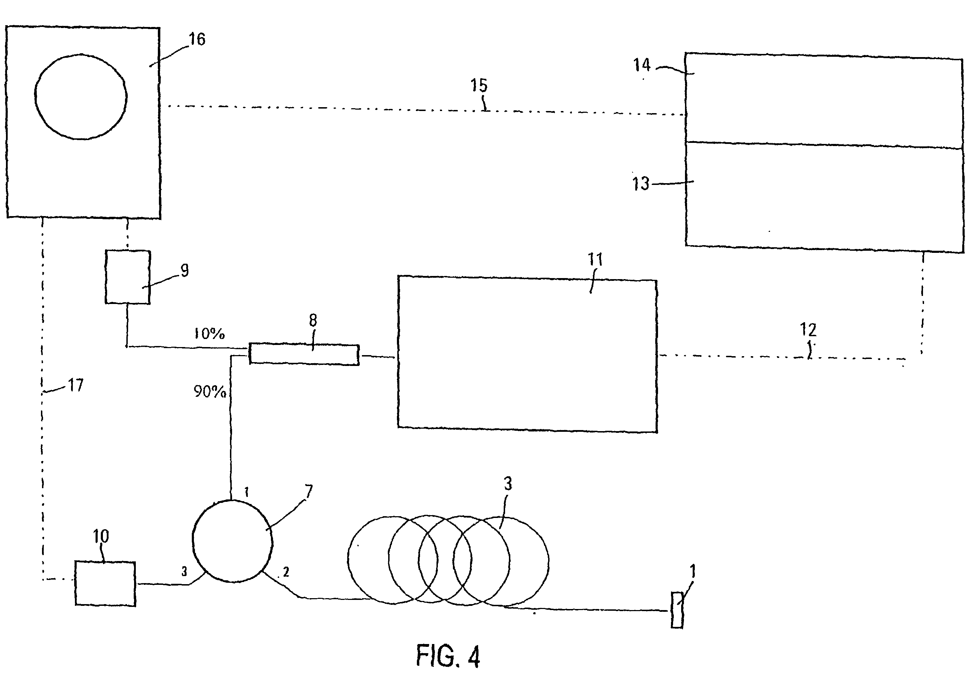

Die Funktionstüchtigkeit des vorgeschlagenen Meßverfahrens wird nun anhand von Beispielen dokumentiert und beschrieben. Zunächst wird die Messung der chromatischen Dispersion anhand der Figuren 4 und 5 beschrieben, die zwei alternative Meßaufbauten zeigen.

In Fig. 4 wird die absolute Gruppenlaufzeit als Funktion der Wellenlänge gemessen, das heißt der Feldmeaplatz 11 besitzt beispielsweise acht umschaltbare Laser mit acht verschiedenen Wellen. Die Laser mit einer Wellenlänge λ = 1193,5 nm bis 1622 nm, werden mit einem Pulsgenerator 13 über eine Leitung 12 angesteuert und moduliert. Ein Koppler, insbesondere Y-Koppler, mit einem Koppelverhältnis beispielsweise 0,1 zu 0,9 führt den 10%igen Lichtimpuls über einen Detektor 9 direkt auf den einen Eingang eines Oszillographen 16, um den Nullpunkt zu definieren. Der 90%-Lichtimpuls wird dem Port 1 des Zirkulators 7 zugeführt und Port 2 des Zirkulators 7 ist mit der Testfaser 3 verbunden, die am Ende mit einem Schmidt-Spiegel 1 verbunden ist. Das reflektierte Licht wird über Port 3 dem Detektor und das Detektorsignal dem anderen Eingang des Oszillators 16 über eine Leitung 17 zugeführt. Der Triggerimpuls des Oszillographen 16 wird mit Hilfe einer variablen elektrischen Verzögerungsleitung 14 derart verzögert, daß auf dem Monitor der Meßimpuls stabil erscheint. Die Verzögerungsleitung 14 ist über eine Leitung 15 mit dem Oszillographen 16 zu diesem Zweck verbunden. Die Position der Impulsspitze wird gemessen und als Meßwert benutzt.

In Fig. 5 wird ein Aufbau vorgestellt, der die relative Gruppenlaufzeit mißt. Referenzlaser und variabler Laser werden gleichzeitig über einen X-Koppler 18 in einen Port 1 eines Zirkulators oder alternativ in ein Bein eines Y-Kopplers eingekoppelt. Das vierte Bein des X-Kopplers 18 liefert die Ausgangssignale des Sendemeßplatzes, die dem Eingang II des Oszillographen zugeführt werden (Doppelimpulse der beiden Laser, die auf dem Bildschirm des Oszillographen 16 übereinander gestellt werden, um die gleiche Startzeit zu garantieren). Es entfällt die eingangs erwähnte quasiinterne Triggerung, wodurch 3 dB Lichtleistung gespart wird, die vorher als Triggerleistung benötigt wurde.

Anhand von zwei Meßbeispielen wird die Leistungsfähigkeit des vorliegenden Meßverfahrens demonstriert. In Tabelle 1 (oberer Teil) sind die Meßergebnisse der einfachen und doppelten Faserlängen einer Depressed-Cladding-Faser von Philips (L = 12,6 km) zusammengestellt. Die Auswertung (Fitfunktion) erfolgt mit dem Legendreschen orthogonalen Polynom vierten Grades. Im unteren Teil der Tabelle handelt es sich um eine dispersionsverschobene Faser von AT&T mit einer Länge von 5,2 km und die Auswertung erfolgt mit einem 5-Term-Sellmeier-Fit. Dabei ist zu beachten, daß die Auswertung der Dispersionsmessungen in der Tabelle 1 an zwei Fasern mit einfacher und doppelter Faserlänge mit Schmidt-Spiegel vorgenommen wurden. Wie sich aus der Tabelle ergibt, ist die Übereinstimmung perfekt, das heißt die Nulldispersionswellenlängen λₒ weichen weniger als 0,1% voneinander ab. Zum Vergleich wurden im Falle der AT&T-DS-Faser die Resultate sehr präziser Messungen mit einem "Tunable External Cavity-Laser (TEC-Laser)" in der Tabelle 1 aufgenommen.

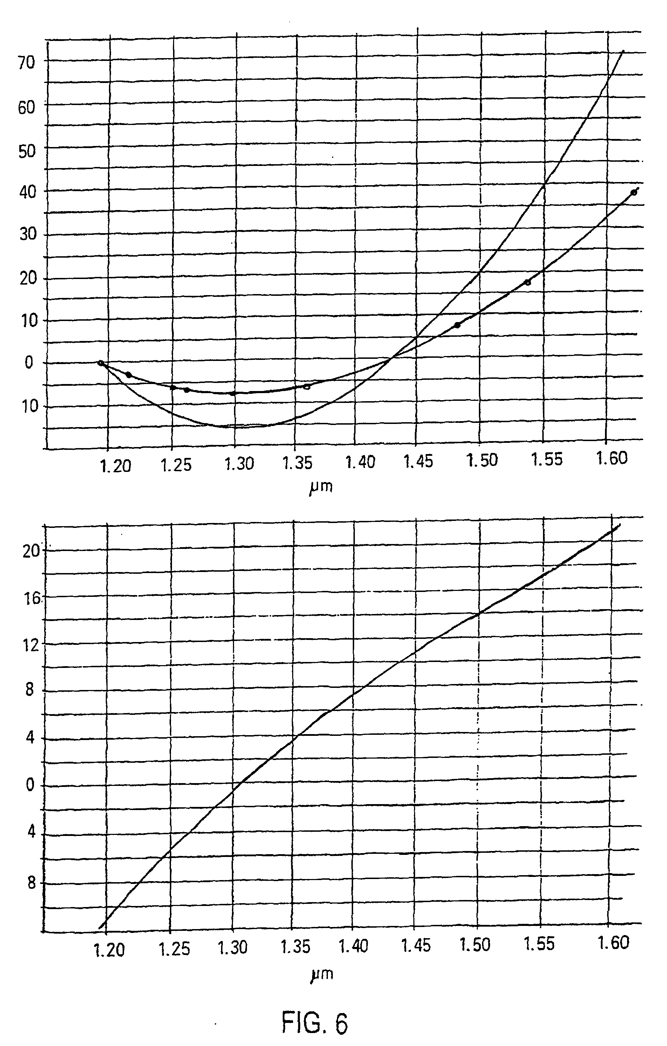

In Fig. 6 sind oben die Gruppenlaufzeitkurven und unten die Dispersionskurven der DC-Faser von Philips mit einer einfachen Faserlänge von 12,6 km und einer doppelten Faserlänge von 25,2 km mit Schmidt-Spiegel dargestellt. Die Gruppenlaufzeitkurven sind nicht längennormiert, sind also unterschiedlich, die Dispersionskurven hingegen fallen praktisch übereinander.

Sehr vorteilhaft ist das hier vorgeschlagene und beschriebene neue Verfahren vor allem auch bei CD-Messungen mit der Phasenverschiebemethode, gerade sie wird bei kommerziellen Geräten angewandt. Einerseits ist bei ihr die Synchronisation Sender - Empfänger umständlich, andererseits kommt ihr großer Vorteil, die hohe Dynamik, dem vorgeschlagenen Meßverfahren sehr entgegen, wegen der doppelten Faserlänge und damit der doppelten Dämpfung.

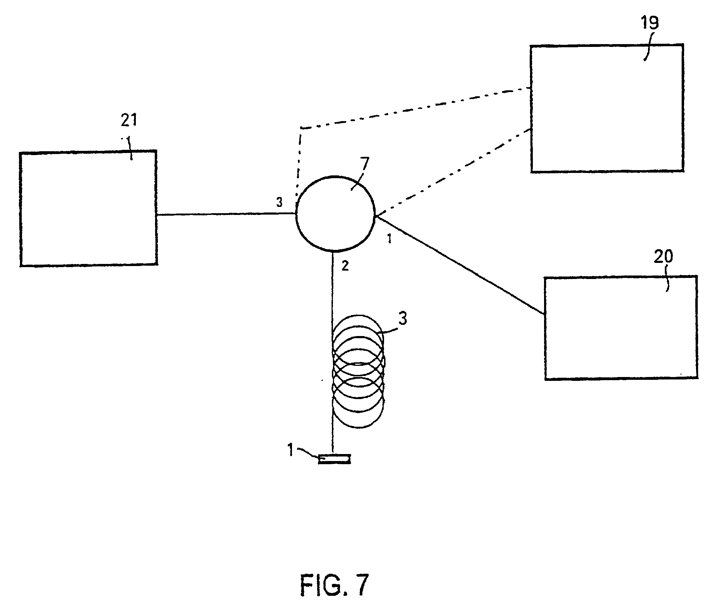

Im folgenden wird die Messung der Polarisationsmodendispersion (PMD) anhand von Fig. 7 beschrieben.

Das Meßprinzip ist das gleiche wie das der in den Figuren 4 bzw. 5 dargestellten Meßanordnungen. Bei Messungen mit einem Michelsoninterferometer wird die linear polarisierte Strahlung der LEDs 20, bei Messungen mit dem Polarimeter 19 die Strahlung des durchstimmbaren Lasers dem Port 1 des Zirkulators 7 (alternativ einem Bein eines Y-Kopplers) zugeführt. Wiederum wird Port 2 mit der Testfaser 3 verbunden und die vom Schmidt-Spiegel 1 reflektierte Leistung einem Analysator des Michelsoninterferometer 21 oder alternativ einem Polarimeter 19 zugeführt. Damit zeigt Fig. 7 den PMD-Meßaufbau in der Zeitdomäne (Michelsoninterferometer) und in der Frequenzdomäne (Polarimeter) mit dem Schmidt-Spiegel 1. Bei der Auswertung der Meßergebnisse muß die Längenabhängigkeit der PMD beachtet werden. Bei hochdoppelbrechenden (HiBi-)Fasern steigt die PMD proportional zur Länge L, bei langen Standardfasern hingegen im wesentlichen mit L^{1/2}. Zunächst werden die hochdoppelbrechenden Fasern untersucht. Dieser Fall ist vorerst für die Nachrichtenübertragungssysteme von untergeordnetem Interesse, weil lange Fasern dieser Art noch nicht eingesetzt werden, so daß die Messungen im Labor vorgenommen werden können.

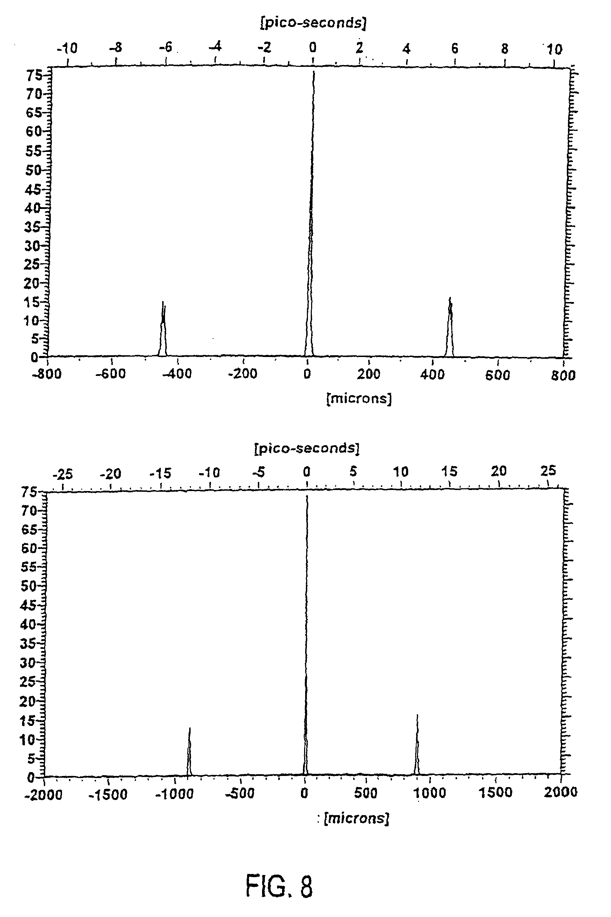

Fig. 8 zeigt ein Meßbeispiel, bei dem die PMD einer 4.37 m langen hochdoppelbrechenden PANDA-Faser gemessen wurde, einfache und doppelte Länge, bei λ=1546 nm. Die beiden Mittelwerte der Cursorabstände zum Autokorrelationspeak sind 5.99 ps bzw. 11.98 ps, also exakt der doppelte Wert. Die Meßgenauigkeit dieser interferometrischen Methode ist außerordentlich hoch.

Von großem Interesse sind hingegen PMD-Messungen nach dem hier beschriebenen Verfahren an Standardfasern, vor allem von installierten Kabeln. Hinsichtlich der PMD können Standard-SM-Fasern als Multimodefasern angesehen werden, was vor allem hinsichtlich der Längenabhängigkeit von Bedeutung ist. Analog dem Verhalten von Multimodefasern bezüglich der Dispersion (Impulsverbreiterung) wächst die PMD zunächst linear mit L, für L < h, wenn h die Koppellänge ist, für L > h steigt die PMD proportional L^{1/2} an. Da h in der Größenordnung 10m liegt, also h << L, kann in guter Näherung angenommen werden, daß die PMD von Fasern verlegter Kabel proportional L^{1/2} ist. Es ist also zu erwarten, daß der PMD Wert bei doppelter Faserlänge, das heißt bei Einsatz des Schmidt-Spiegels, nur um den Faktor 1,41 (2^{1/2}) größer ist als der Wert der einfachen Faserlänge. Das wurde experimentell überprüft und verifiziert, wie die Tabellen 2a und b zeigen. Bei der Diskussion der Meßergebnisse der Tabellen 2a und b muß berücksichtigt werden, daß bei PMD-Messungen sowohl Reproduzierbarkeit als auch Meßgenauigkeit schlecht sind, basierend auf dem statistischen Charakter der PMD. Die Messungen werden sowohl mit dem Michelsoninterferometer 19 (in der Zeitdomäne) als auch mit dem Polarimeter 20 (in der Frequenzdomäne) durchgeführt. Das Polarimeter 20 erlaubt die PMD-Messung mit der Jones-Matrix-Methode (JMM), mit der Arc-Angle-Methode (AAM) und mit der Drei-Stokes-Parameter-Methode (3StPM), die auch in der Fachwelt als Wavelength-Scanning-Methode bezeichnet wird. In der Tabelle 2a sind die Resultate von Feldmeßungen an der Telekom Betriebsstrecke Darmstadt-Rödermark (-Darmstadt) und München-Markt Schwaben (-München) zusammengestellt. Die Werte sind in ps angegeben und die Länge des Kabels Darmstadt-Rödermark (-Darmstadt) beträgt
L = 22,45 km und die des Kabels München-Markt Schwaben (-München) beträgt L = 30,25 km; bei doppelter Länge - Benutzung des Schmidt-Spiegels und eines Y-Kopplers; Messungen mit dem Michelsoninterferometer und dem Polarimeter (Jones-Matrix-Methode (JMM) und Arc-Angle-Methode (AAM)). Jeweils in der untersten Zeile der beiden Tabellen ist der aus der Einfachlängenmessung berechnete Wert für die Doppellänge aufgelistet worden. Man erhält ihn durch Multiplikation mit dem bereits erwähnten Faktor 1,41. Der Vergleich mit dem Meßwert der Doppellänge erlaubt eine Aussage über die Anwendbarkeit des vorgeschlagenen Meßverfahrens. Die Übereinstimmung ist im Rahmen der generellen Meßgenauigkeit sehr befriedigend, zumal die Messungen an verschiedenen Tagen und zu verschiedenen Jahreszeiten gemacht wurden. Es wurde ja bereits erwähnt, daß die Reproduzierbarkeit der PMD-Messungen nicht besonders gut ist. Außerdem ist anzufügen, daß mit der Arc-Angle-Methode deutlich kleinere PMD-Werte gemessen werden als mit den beiden anderen Polarimeter-Meßmethoden. Dies ergibt sich aus der prinzipiellen Eigenschaft des Polarimeters. In Tabelle 2b sind gemessene PMD-Daten in ps von zwei SM-Fasern auf Spulen, wobei die zweite Faser mit Schrägschliffsteckern konfektioniert ist, angegeben. Die Messungen sind mit dem Michelsoninterferometer und dem Polarimeter (JMM, AMM, 3StPM) durchgeführt. Die Messung der doppelten Länge sind mit dem Schmidt-Spiegel und Y-Koppler durchgeführt worden. Um zu prüfen, ob durch Fresnelreflexionen an Steckern Probleme entstehen, ist hier bei den Messungen die zweite Faser mit Schrägschliffsteckern konfektioniert worden. Man entnimmt den Meßdaten aus der Tabelle, daß Steckerreflexionen keine Rolle spielen. Prinzipiell muß man bei Messungen dieser Art auf Fresnelreflexionen achten. Vermeiden kann man sie einfach durch Immersionsöl zwischen den Steckerstirnflächen.

Aus den Tabellen ergibt sich, daß das hier beschriebene Meßverfahren auch bei Messungen an SM-Fasern auf Spulen durchaus sehr befriedigende Ergebnisse liefert.

Zusammenfassend ist festzustellen, daß das dargestellte und beschriebene Meßverfahren die Meßtechnik von Glasfaser- bzw. Plastikfaserparametern, insbesondere an verlegten Kabeln, revolutioniert. Die Meßvorgänge werden erleichtert, erhebliche Kosten werden eingespart und manche Messungen an Einzelfasern werden überhaupt erst möglich. Der eingesetzte Zusatzstecker mit Schmidt-Spiegel ist ein einfaches und preiswertes Bauelement, es kann leicht in großer Stückzahl hergestellt werden. Auf der Empfängerseite muß nur noch der Schmidt-Spiegel mit der Testfaser zusammengesteckt werden, ein Handgriff, den ungelerntes Personal ausführen kann. Das vorgeschlagene Verfahren ist auch prinzipiell bei Multimodefasern und wie bereits erwähnt bei Plastikfasern einsetzbar, wenn zum Beispiel Bandbreitenmessungen vorgenommen werden sollen.

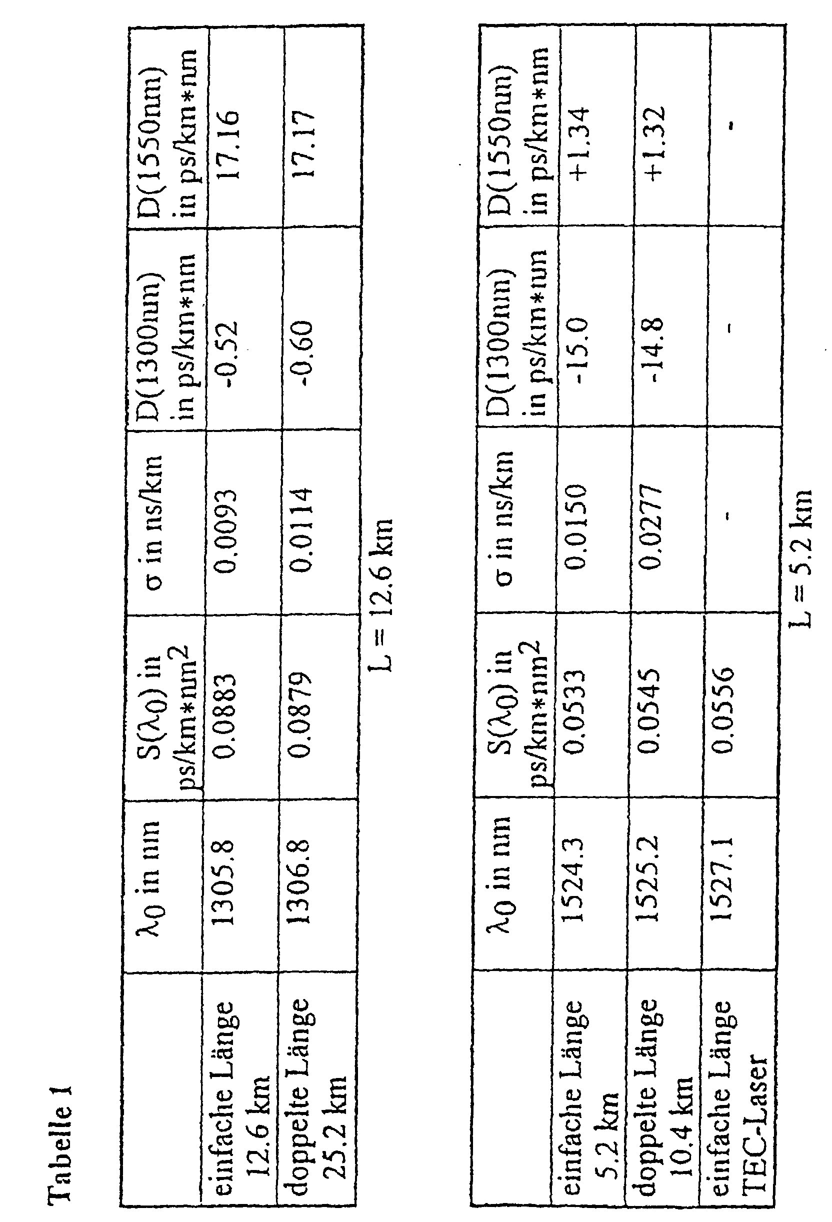

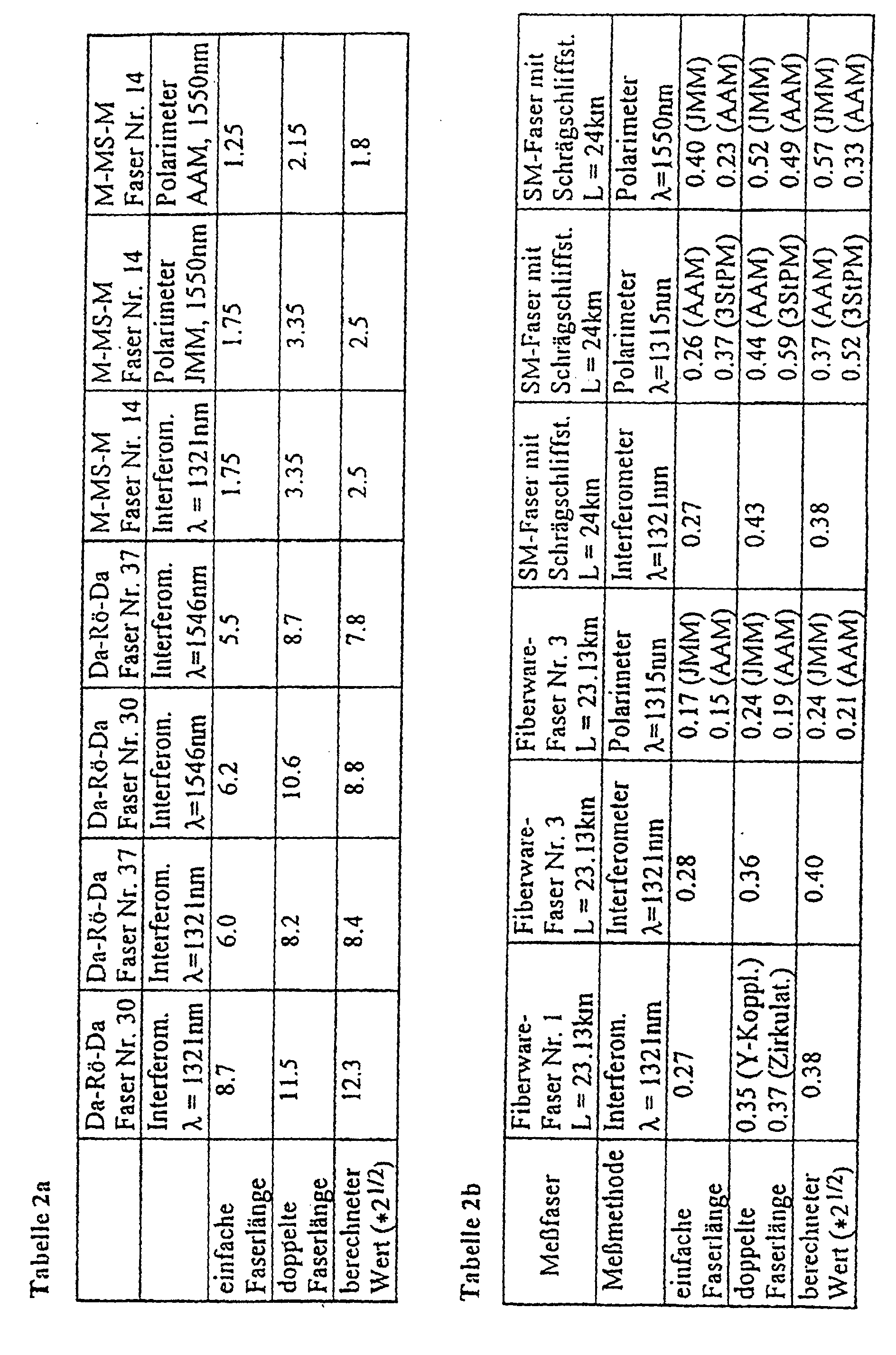

### Liste der Bezugszeichen

- 1: Schmidt-Spiegel
- 2: Faserstecker
- 3: Faser
- 4: Schmidt-Stecker bzw. Schmidt-Spiegelstecker
- 5: normaler Stecker
- 6: Y-Koppler
- 7: Zirkulator mit Ports 1-3
- 8: Koppler
- 9,10: Detektor
- 11: Feldmeßplatz
- 12: Leitung
- 13: Pulsgenerator
- 14: Verzögerungsleitung
- 15: Triggerleitung
- 16: oszillograph
- 17: Leitung
- 18: X-Koppler
- 19: Polarimeter
- 20: LEDs des Michelsoninterferometers
- 21: Analysator des Michelsoninterferometers
- 22: Referenzlaser
- 23: variabler Laser
- 24: Eingang I
- 25: Eingang II
- 26: Triggereingang

## Patentansprüche

1. Verfahren zur Messung relevanter Übertragungsparameter von mehreren Einzelfasern aufweisende Kabel, wie Telekommunikationskabel, mit Hilfe einer Sendestation und einer Empfangsstation, die jeweils an eine Einzelfaser des Kabels angeschlossen werden, wobei die Messung zwischen zwei Enden der Einzelfasern erfolgt und ein Messverfahren zur Bestimmung der chromatischen Dispersion oder der Polarisationsmodendispersion (PMD) bei Monomodeglasfasern und ein Messverfahren zur Bestimmung der Bandbreite bei Multimodeglas- oder plastikfasern verwendet wird, **dadurch gekennzeichnet,**
**dass** die Messstrahlung am Ende einer Testfaser (3) mit Hilfe eines Spiegels, insbesondere Schmidt-Spiegels, (1) mit mindestens 99% igem Reflexions vermögen zum Fasereingang reflektiert wird und
**dass** nur am Einkoppelort eine die Messung der gewünschten Faserparameter ausführende kombinierte Sende- und Empfangsstation als feldmeßplatz (11) angeschlossen ist.

2. Verfahren nach Patentanspruch 1, **dadurch gekennzeichnet,**
**daß** eine hoch reflektierende Spiegelschicht auf die Stirnfläche eines beliebigen Fasersteckers (2) aufgebracht wird,
**daß** der mit der Spzegelschicht versehene Faserstecker (2) direkt oder über ein kurzes Glasfaserkabelstück bzw. Plastikfaserkabelstück, das mit einem normalen Stecker (5) und dem Spiegelstecker (4) ausgerüstet ist, verbunden bzw. zusammengesteckt wird.

3. Verfahren nach einem der Patentansprüche 1 oder 2, **dadurch gekennzeichnet,**
**daß** die reflektierende Meßstrahlung eingangsseitig mit einem Y-Koppler (6) ausgekoppelt wird und dem Meßvorgang bzw. dem kombinierten Meßgerät zugeführt wird.

4. Verfahren nach Patentanspruch 3, **dadurch gekennzeichnet,**
**daß** der Y-Koppler (6) spektral breitbandig ausgelegt ist und in beide optische Fenster (um 1300 nm und 1550 nm) einsetzbar ist.

5. Verfahren nach Patentanspruch 4, **dadurch gekennzeichnet**,
daB in beiden optischen Fenstern je ein Zirkulator (7) mit sehr kleiner Einfügedämpfung eingefügt wird.

6. Verfahren nach Patentanspruch 4, **dadurch gekennzeichnet,**
**daß** für beide optischen Fenster, das heißt im gesamten interessierenden Spektralbereich nur ein Zirkulator (7) verwendet wird.

7. Verfahren nach einem der Patentansprüche 1 bis 6, **dadurch gekennzeichnet,**
**daß** es zur Messung der chromatischen Dispersion, der Polarisationsmodendispersion (PMD) von Monomodeglasfasern und der Bandbreite von Multimodeglas- und plastikfasern angewendet wird.

8. Verfahren nach einem der Patentansprüche 1 bis 7, **dadurch gekennzeichnet,**
**daß** es bei hochpräzisen Dämpfungsmessungen mit Rückschneidetechnik an verlegten Glas- bzw. Plastikfaserkabeln oder bei Labormessungen für beide Glasfaserenden in getrennten Räumen verwendet wird.

9. Verfahren nach einem der Patentansprüche 1 bis 8, **dadurch gekennzeichnet,**
**daß** die am Schmidt-Spiegel (1) reflektierte Meßstrahlung in der Testfaser (3) zum Ausgangspunkt zurückgeführt wird und
**daß** ein Zirkulator (7) bei Glasfasern mit einer spektralen Bandbreite zwischen 1250 nm und 1620 nm oder bei Plastikfasern mit einer spektralen Bandbreite zwischen 650 nm und 950 nm eingesetzt wird.

10. Verfahren nach einem der Patentansprüche 1 bis 9, **dadurch gekennzeichnet,**
**daß** im Feldmeßplatz (11) angeordnete Laser mit einem Pulsgenerator (13) angesteuert und moduliert werden,
**daß** ein zweiter Y-Koppler (8) ein Signal, das etwa 10% des Lichtstrahles entspricht, direkt zu einem Oszillograph (16) führt,
daB ein etwa 90% Lichtimpuls einem ersten Port eines Zirkulators (7) zugeführt wird, dessen zweiter Port mit der Testfaser (3) verbunden ist, die am Ende mit einem Spiegel (1) verbunden wird,
daB das reflektierte Licht über den dritten Port des Zirkulators (7) einem Detektor (10) zugeführt wird, der sein Ausgangssignal dem anderen Eingang des Oszillographen (16) zuführt,
**daß** der Triggerimpuls des Oszillographen (16) mit Hilfe einer variablen elektrischen Verzögerungsleitung (14) so verzögert wird, daß auf dem Monitor des Oszillographen der Meßimpuls stabil erscheint und
**daß** die Position der Pulsspitze gemessen und als Meßwert benutzt wird.

## Claims

1. Process for measuring relevant transmission parameters of cables comprising a plurality of individual fibres, such as telecommunications cables, using a transmitting station and a receiving station each connected to an individual fibre of the cable, the measurement being performed between two ends of the individual fibres, use being made of a measuring process for determining the chromatic dispersion or polarization mode dispersion (PMD) in the case of monomode glass fibres and of a measuring process for determining the bandwidth in the case of multimode glass or plastic fibres, **characterized in that**
the test radiation at the end of a test fibre (3) is reflected to the fibre input using a mirror, particularly a Schmidt mirror, (1) with at least 99% reflecting power and
a combined transmitting and receiving station, performing the measurement of the desired fibre parameters, in the form of a field measuring station (11) is connected only at the incoupling site.

2. Process according to claim 1, **characterized in that**
a highly reflective coating is applied to the end face of any fibre connector (2);
the fibre connector (2) provided with the reflective coating is connected directly or plugged together using a short glass fibre cable piece or plastic fibre cable piece equipped with a normal connector (5) and the mirror connector (4).

3. Process according to any one of claims 1 or 2, **characterized in that**
the reflecting test radiation is coupled out at the input end with a Y-coupler (6) and is supplied to the measurement operation and/or to the combined measuring device.

4. Process according to claim 3, **characterized in that**
the Y-coupler (6) is of spectrally broadband design and can be used in both optical windows (around 1300 nm and 1550 nm).

5. Process according to claim 4, **characterized in that**
a circulator (7) with very low insertion loss is inserted in each of the two optical windows.

6. Process according to claim 4, **characterized in that**
only one circulator (7) is used for both optical windows, i.e. throughout the entire spectral range of interest.

7. Process according to any one of claims I to 6, **characterized in that**
said process is used for measuring the chromatic dispersion, polarization mode dispersion (PMD) of monomode glass fibres and the bandwidth of multimode glass and plastic fibres.

8. Process according to any one of claims 1 to 7, **characterized in that**
said process is used for both glass fibre ends in separate spaces in high-precision loss measurements using cutback techniques on laid glass or plastic fibre cables or in laboratory measurements.

9. Process according to any one of claims I to 8, **characterized in that**
the test radiation reflected by the Schmidt mirror (1) is returned in the test fibre (3) to the starting point and
a circulator (7) is used in the case of glass fibres with a spectral bandwidth between 1250 nm and 1620 nm or in the case of plastic fibres with a spectral bandwidth between 650 nm and 950 nm.

10. Process according to any one of claims 1 to 9, **characterized in that**
lasers disposed in the field measuring station (11) are controlled and modulated with a pulse generator (13);
a second Y-coupler (8) directs a signal corresponding to around 10% of the light beam directly to an oscillograph (16);
an around 90% light pulse is supplied to a first port of a circulator (7), the second port of said circulator (7) being connected to the test fibre (3), said test fibre (3) being connected at the end to a mirror (1);
the reflected light is supplied via the third port of the circulator (7) to a detector (10), said detector (10) supplying its output signal to the other input of the oscillograph (16);
the trigger pulse of the oscillograph (16) is time-delayed by means of a variable electric time-delay line (14) such that the measuring pulse appears stable on the monitor of the oscillograph and
the position of the pulse peak is measured and is used as the measured value.

## Revendications

1. Procédé pour la mesure des paramètres de transmission importants de câbles présentant plusieurs fibres individuelles, comme les câbles de télécommunication, à l'aide d'une station émettrice et d'une station réceptrice, chacune reliée à une fibre individuelle du câble, la mesure étant réalisée entre deux extrémités des fibres individuelles alors qu'on utilise un procédé pour déterminer la dispersion chromatique ou la dispersion des modes de polarisation (PMD) pour les fibres de verre monomode et un procédé de mesure pour déterminer la largeur de bande pour les fibres de verre multimode ou les fibres plastiques, **caractérisé en ce que**
le rayonnement de mesure à l'extrémité d'une fibre d'essai (3) est réfléchi vers l'entrée de la fibre à l'aide d'un miroir, en particulier d'un miroir Schmidt (1) doté d'un pouvoir réfléchissant d'au moins 99% et
**en ce qu'**une station émettrice et réceptrice combinée jouant le rôle de poste de mesure de champ (II), réalisant la mesure des paramètres souhaités des fibres, est seulement raccordée à l'endroit du couplage.

2. Procédé selon revendication 1, **caractérisé en ce que**
une couche miroir hautement réfléchissante est appliquée sur la face frontale d'une quelconque fiche pour fibre (2),
**en ce que** la fiche pour fibre (2) dotée d'une couche miroir est reliée ou connectée directement ou par l'intermédiaire d'un court tronçon de câble en fibres de verre ou d'un court tronçon de câble en fibres plastiques équipé d'une fiche normale (5) et de la fiche miroir (4).

3. Procédé selon l'une des revendications 1 ou 2,
**caractérisé en ce que**
le rayonnement de mesure réfléchissant est déclenché, côté entrée, avec un coupleur Y (6) et est conduit vers l'opération de mesure respectivement à l'appareil de mesure combiné.

4. Procédé selon revendication 3,
**caractérisé en ce que**
le coupleur Y (6) est spectralement à large bande et utilisable dans les deux fenêtres optiques (autour de 1300 nm et 1550 nm).

5. Procédé selon revendication 4,
**caractérisé en ce que**
un circulateur (7) est inséré, avec une très faible perte d'insertion, dans chacune des deux fenêtres optiques.

6. Procédé selon revendication 4,
**caractérisé en ce que**
on n'utilise qu'un seul circulateur (7) pour les deux fenêtres optiques, autrement dit dans tout le domaine spectral intéressant.

7. Procédé selon l'une quelconque des revendications 1 à 6
**caractérisé en ce que**
il est utilisé pour mesurer la dispersion chromatique, la dispersion des modes de polarisation (PMD) de fibres de verre monomode et la largeur de bande de fibres de verre multimode et de fibres plastiques.

8. Procédé selon l'une quelconque des revendications 1 à 7,
**caractérisé en ce que**
il est utilisé pour mesurer très précisément les pertes avec une technique de rétro coupure sur les câbles en fibres de verre respectivement plastiques posés ou pour mesurer, en laboratoire, les deux extrémités des fibres de verre dans des pièces séparées.

9. Procédé selon l'une quelconque des revendications 1 à 8,
**caractérisé en ce que**
le rayonnement de mesure réfléchi sur le miroir Schmidt (1) est reconduit au point de départ dans la fibre d'essai (3) et
**en ce qu'**on utilise un circulateur (7) pour les fibres de verre d'une largeur de bande spectrale comprise entre 1250 nm et 1620 nm ou, pour les fibres plastiques d'une largeur de bande spectrale comprise entre 650 nm et 950 nm.

10. Procédé selon l'une quelconque des revendications 1 à 9
**caractérisé en ce que**
des lasers placés sur le poste de mesure de champ (11) sont commandés et modulés avec un générateur d'impulsions (13),
**en ce qu'**un deuxième coupleur Y (8) conduit directement un signal, correspondant à environ 10% du faisceau de lumière à un oscillographe (16),
**en ce qu'**une impulsion lumineuse d'environ 90% est conduite à un premier port d'un circulateur (7) dont le deuxième port est relié à la fibre d'essai (3) qui est reliée, à l'extrémité, à un miroir (1),
**en ce que** la lumière réfléchie est conduite, par l'intermédiaire du troisième port du circulateur (7) à un détecteur (10) qui conduit son signal de départ à l'autre entrée de l'oscillographe (16),
**en ce que** l'impulsion de déclenchement de l'oscillographe (16) est temporisée à l'aide d'une conduite de temporisation électrique variable (14) de telle façon que l'impulsion de mesure apparaisse sur le moniteur de l'oscillographe de façon stable et
**en ce que** la position de la pointe de l'impulsion est mesurée et utilisée comme valeur mesurée.
